# FASCICULE DE BREVET EUROPEEN

(11) **EP 1 704 476 B1**
(45) Date de publication et mention de la délivrance du brevet: **15.04.2009**
(21) Numéro de dépôt: 05717408.8
(22) Date de dépôt: 13.01.2005
(51) Int. Cl.: G06F 9/45

(54) **SYSTEME DE GENERATION AUTOMATIQUE DE CODES OPTIMISES**
SYSTEM ZUM AUTOMATISCHEN ERZEUGEN OPTIMIERTER CODES
SYSTEM FOR AUTOMATICALLY GENERATING OPTIMISED CODES

(30) Priorité: 14.01.2004 FR 0400291
(43) Date de publication de la demande: 27.09.2006
(73) Titulaire: COMMISSARIAT A L'ENERGIE ATOMIQUE, 75015 Paris (FR); Caps Enterprise, 35700 Rennes (FR); Université de Versailles Saint-Quentin-en-Yvelines, 78053 Versailles Cédex (FR)
(72) Inventeur: BODIN, François, F-35700 Rennes (FR); JALBY, William, F-78124 Mareil sur Mauldre (FR); LE PASTEUR, Xavier, F-92340 Bourg La Reine (FR); LEMUET, Christophe, F-78320 Levis-saint-nom (FR); COURTOIS, Eric, F-35000 Rennes (FR); PAPADOPOULO, Jean, F-92160 ANTONY (FR); LECA, Pierre, F-75015 PARIS (FR)
(74) Mandataire: Thévenet, Jean-Bruno
(86) Numéro de dépôt international: PCT/FR2005/000073
(87) Numéro de publication internationale: WO 2005/073851

(56) Documents cités:
- DE-A- 4 112 090
- US-A- 5 815 721
- US-A1- 2003 056 083
- JAMES M. STICHNOTH: "Generating Code for High-Level Operations through Code Composition" PHD THESIS CMU-CS-97-165, [Online] août 1997 (1997-08), XP002304052 CARNEGIE MELLON UNIVERSITY Extrait de l'Internet: URL:http://reports-archive.adm.cs.cmu.edu/ anon/1997/CMU-CS-97-165.pdf> [extrait le 2004-11-02]

## Description

La présente invention a pour objet un système de génération automatique de codes optimisés opérationnels sur une plate-forme matérielle prédéfinie comportant au moins un processeur, pour un domaine d'application prédéterminé, à partir de codes sources soumis par des utilisateurs (ces utilisateurs étant compris ici au sens large et incluant des utilisateurs finaux, mais également des programmeurs d'applications ou des programmeurs système).

Depuis l'origine de l'informatique, de nombreux travaux ont été réalisés concernant les compilateurs.

Le principe d'un compilateur est d'analyser un code source décrit dans un langage de haut niveau puis de générer son équivalent en code binaire pour la machine cible. En général ce processus est effectué statiquement avant l'exécution. Il existe aussi des interpréteurs mettant en oeuvre des technologies de compilation dynamique qui ont permis de lever cette dernière contrainte en offrant la possibilité de générer le code au dernier moment lors de l'exécution.

Le compilateur est un élément de la chaîne de préparation des programmes. Le résultat de la compilation peut être complété par des procédures déjà compilées et générées (compilation séparée ou bibliothèques), liées statiquement au chargement ou dynamiquement à l'exécution.

Les compilateurs sont en général organisés en trois phases :
1. Génération de code intermédiaire : à partir du code source, le compilateur reconnaît les idiomes et génère une forme abstraite indépendante du langage source, communément appelée langage intermédiaire. Ce langage est indépendant de la machine cible.
2. Optimisation haut niveau : dans cette phase sont regroupées un certain nombre d'optimisations qui sont en général indépendantes de l'architecture cible : propagation de constantes, réduction de force, expressions communes... Ces optimisations correspondent en général à des métriques simples : diminution du nombre d'instructions, simplification de la structure du code.
3. Génération de code et optimisation bas niveau ; dans cette phase sont réalisées toutes les opérations et optimisations propres à la machine cible : génération et sélection des instructions, allocation de registres, ordonnancement des instructions, etc.

Les qualités d'un compilateur sont non seulement liées à l'architecture cible (performance du code généré) mais aussi au langage source (plus ou moins facile à compiler) et à ses caractéristiques en tant que logiciel (robustesse, richesse des options, vitesse d'exécution, etc.).

Sauf le cas particulier de la compilation dynamique, l'ensemble des trois phases ci-dessus doivent être réalisées avant l'exécution et ce dans un temps raisonnable, ce qui limite d'autant la complexité des algorithmes d'optimisation qui peuvent être implémentés dans un compilateur.

Une grande part de la recherche sur les compilateurs est donc en premier lieu liée au choix et à la définition du langage source de haut niveau.

Les évolutions des compilateurs sont également liées aux évolutions de l'architecture des processeurs et plus précisément aux modèles de performance décrivant le comportement de ces architectures. Comme dans tout problème d'optimisation, une difficulté importante est la définition d'une fonction coût qui soit représentative du temps d'exécution.

Les premiers jeux d'instructions avaient des comportements très simples : le temps d'exécution d'une séquence d'instructions s'obtenait tout simplement comme la somme des temps d'exécution de chacune des instructions de la séquence. En conséquence, le processus d'optimisation était très simple et la principale stratégie d'optimisation consistait à réduire le nombre et la complexité des instructions générées.

L'apparition des premiers jeux d'instructions CISC ("Complex Instruction Set Computer") a légèrement modifié la donne dans la mesure où des instructions très complexes devenaient disponibles. Le problème d'optimisation devenait alors essentiellement un problème de reconnaissance d'idiomes (« pattern matching »). Dans cette même catégorie, on peut inclure les jeux d'instructions vectorielles et les vectoriseurs qui étaient capables de reconnaître les boucles qui se prêtaient directement à une génération de code vectoriel. Au besoin le code source pouvait aussi être transformé pour faire apparaître des structures de code vectoriel.

Une rupture dans les stratégies d'optimisation est venue avec l'introduction des pipelines, évolution architecturale qui découpe le traitement des instructions en plusieurs opérations exécutées séquentiellement, à l'image d'une chaîne d'assemblage dans une usine. Cette technique qui permet de superposer l'exécution de plusieurs instructions à un instant donné améliore sensiblement les performances des systèmes, mais introduit des déviations importantes en cas de « rupture » de pipeline, suite par exemple à la présence d'instruction de branchement. Elle a ainsi mis fin à la prédictibilité du comportement d'un code donné. Une autre rupture importante provient de l'utilisation des hiérarchies mémoires : l'optimisation devait alors s'appuyer sur l'évaluation fine d'une métrique très particulière : la localité (spatiale et temporelle). Cependant l'interaction entre le processeur et le système mémoire étant simple, le processus d'optimisation devait avoir pour principal objectif de minimiser le nombre de "miss" (échecs) car chaque échec rajoutait une pénalité au temps d'exécution. Il faut noter cependant que la minimisation du nombre de "miss" était délicate et essentiellement réalisable pour des structures de code simple de type boucle. Cette difficulté d'estimation de manière statique des propriétés de localité conduisit à utiliser des méthodes d'optimisation par gestion des profils : le code était exécuté une première fois pour déterminer précisément les propriétés de localité (construction d'un profil). Ce profil était alors utilisé dans une deuxième passe pour effectuer les optimisations liées à l'exploitation de la localité. A ce niveau de complexité architecturale, il était déjà très difficile de définir de manière simple une stratégie efficace d'optimisation. Plus exactement, il était extrêmement délicat de savoir combiner différentes optimisations et ce même sur des cas très simples : il n'existait pas de mécanisme permettant de modéliser/prendre en compte de manière efficace les performances. C'est dans ce cadre qu'ont été développées les techniques de compilation itérative qui combinent exécution et optimisation de manière à générer le meilleur code possible. Plus précisément, la compilation itérative consiste en la mise en oeuvre d'une boucle de "transformation de code-mesure de performance (statique ou dynamique)". Il s'agit essentiellement de techniques permettant d'explorer l'espace des transformations de code à moindre coût pour ne conserver que les solutions ayant donné les meilleures solutions. Le coût très élevé en temps de calcul et de mise au point de ces méthodes itératives a limité leur champ d'application à l'optimisation de bibliothèques.

Les architectures RISC ("Reduced Instruction Set Computer") qui utilisaient un jeu d'instructions simple et uniforme (à l'opposé du CISC) ont vu le jour vers le milieu des années 80. Les premières générations de processeurs RISC étaient très limitées en termes de fonctionnalité et la qualité du code généré (en particulier l'ordonnancement des instructions) devenait alors un facteur clé dans la course à la performance. De manière très similaire, les architectures VLIW ("Very Long Instruction Word") utilisaient des techniques de compilation tout à fait semblables pour exploiter au mieux le matériel. Ces deux architectures RISC et VLIW avaient toujours un modèle de performance simple déterministe dans la mesure où globalement les instructions s'exécutaient dans le même ordre que le code du programme généré, ce qui simplifiait considérablement le comportement de ces architectures et par là-même le processus d'optimisation. Toutefois, très rapidement ces architectures ont généralisé l'utilisation du pipeline et des caches mémoire pour obtenir de meilleures performances (plus précisément, ceci a amené une amélioration des performances en moyenne et au détriment de la prédictibilité)

L'apparition des architectures superscalaires (capables d'exécuter plusieurs instructions par cycle) et surtout les mécanismes de traitement dans le désordre ("Out of Order Processing") des instructions ont rendu encore plus difficiles les processus d'optimisation des performances. De plus, simultanément les hiérarchies mémoires ont évolué rapidement : le nombre de niveaux a augmenté et surtout divers mécanismes permettant de gérer de manière plus ou moins explicite les différents caches (pré-chargement, gestion de priorité,...) ont fait leur apparition. L'ensemble de ces mécanismes a rendu le comportement de fractions de code même très simples (boucle avec accès à 2 ou 3 tableaux) extrêmement difficile et par là-même impossible à optimiser en s'appuyant sur des modèles simples de performance. Cette situation n'a fait qu'empirer avec l'écart grandissant entre les performances des processeurs et celles des mémoires.

Globalement, au cours des deux dernières décennies, au niveau de l'architecture des processeurs, la richesse en termes de fonctionnalités s'est considérablement accrue. Ainsi le nombre de registres a considérablement augmenté : de 8 registres en standard sur les architectures CISC, on est passé à 32 registres sur les architectures RISC et même à plus de 80 registres sur les architectures superscalaires. Au premier abord on peut penser qu'augmenter le nombre de registres va simplifier l'optimisation. En pratique, l'évolution des mémoires a rendu l'utilisation des registres encore plus cruciale et sur ce problème d'allocation de registre, le coût des algorithmes efficaces d'allocation de registre a considérablement augmenté car leur complexité est exponentielle en fonction du nombre de registres disponibles.

En réponse à ces évolutions récentes, la technologie des compilateurs a peu évolué : le nombre d'optimisations mises en oeuvre a bien sûr augmenté mais la capacité à définir une stratégie globale d'optimisation n'a pas progressé et a même diminué.

Enfin, une dernière tendance est apparue avec la compilation "dynamique". Le principe est simple et attrayant : la compilation dynamique (ou encore spécialisation à l'exécution) consiste à effectuer des optimisations de code au dernier moment, c'est-à-dire à l'exécution. Une séquence de code est adaptée ("spécialisée") en fonction des données d'entrée (contexte d'exécution) d'un programme. Un mécanisme à l'exécution "examine" le comportement des programmes suivant la fréquence d'exécution des séquences d'instructions et décide ou non de mettre en oeuvre des versions optimisées pour un contexte d'exécution précis. Ce type de mécanisme intrinsèquement dynamique est limité à des techniques d'optimisation peu coûteuses en temps de calcul pour leur mise en oeuvre car elles ne doivent pas pénaliser l'exécution des codes.

On rappelle par ailleurs qu'une bibliothèque est un ensemble de procédures, représentatif d'un domaine ou d'une portion de ce domaine : les composants d'une bibliothèque doivent en fait correspondre à des procédures standard fréquemment utilisées. Le concept de bibliothèque est très ancien, antérieur à la notion de compilateurs et c'est un des grands piliers du génie logiciel (réutilisation de composants). En particulier, Java est l'un des exemples de langages qui utilisent très systématiquement la notion de bibliothèque.

Les bibliothèques peuvent correspondre à différents niveaux d'abstraction du plus simple au plus compliqué : BLAS 1 ("Basic Linear Algebra Subroutines Level I") est un ensemble d'opérations très simples portant sur des vecteurs mais permettant d'exprimer un grand nombre d'algorithmes classiques d'algèbre linéaire. A l'autre extrême, LINPACK (resp. EISPACK) est un ensemble complet de procédures permettant la résolution de systèmes linéaires (resp. le calcul de vecteurs propres et de valeurs propres). Un grand nombre de bibliothèques ont été développées et largement utilisées dans les domaines particuliers suivants :
- Calcul scientifique : BLAS1, BLAS2, BLAS3, BLAST, SPARSE BLAS, LINPACK, LAPACK, BLACS, PVM, MPI, etc.
- Traitement de signal : FFTPACK, VSIPI, etc.
- Graphique : DirectX, OpenGL.

Le fait que, dans un domaine d'applications donné, un certain nombre de bibliothèques aient été définies et identifiées traduit le fait que ce domaine puisse être "synthétisé".

Le plus gros défaut des bibliothèques est cependant que leur fonctionnalité est très limitée et qu'elles induisent une utilisation manuelle (c.a.d. nécessitent l'insertion dans le code source d'un appel explicite de procédure).

Les premières générations de bibliothèques (correspondant à des procédures simples et de petite taille) ont été en général développées à la main en assembleur. Ceci est très souvent resté le cas dès que la performance est le critère majeur (sous réserve bien sûr que les procédures restent d'une taille raisonnable).

Par contre, à la différence de la compilation qui est globalement un processus "en ligne" (les temps de compilation doivent rester modérés), l'optimisation de bibliothèques est essentiellement un processus "hors connexion" et peut utiliser des méthodes beaucoup plus gourmandes en temps de calcul. Ainsi la compilation itérative est un excellent outil d'optimisation pour le développement de bibliothèques mais qui ne peut malheureusement être utilisé que pour des codes simples vu sa lourdeur d'utilisation.

Dans le même ordre d'idée, la technologie de type "Automatic Tuning Liner Algebra Software" permet de réaliser une partie de l'optimisation (choix des bons paramètres tels que tailles des blocs). Malheureusement cette technique est d'utilisation très restreinte car elle est très dépendante du type d'application considéré (calcul sur des matrices denses, calculs caractérisés par une très forte localité temporelle).

Une autre technique de génération et d'optimisation de code est présentée dans le document Generating Code for High-Level Operations through Code Composition par James M. Stichnoth (Août 1997, CMU-CS-97-165) ; cette technique utilise des portions prédéfinies de code (*code templates*) qui contiennent du code cible et des commandes de compilation spécifiant comment ces portions de code sont à composer.

Les outils d'analyse de performance existants sont très variés (en particulier en fonction de l'objectif recherché) :
- Tests de performances (« benchmarks ») : ce sont des codes plus ou moins représentatifs d'un domaine d'application et qui permettent de comparer les performances de diverses machines.
- Simulateurs : ils permettent d'appréhender le comportement d'une architecture au niveau le plus fin. Malheureusement ils sont très coûteux, délicats à développer, très lents et pas nécessairement fidèles par rapport au processeur cible.
- Modèles mathématiques : il s'agit de mettre en équation la performance de la machine. En général leur utilisation est extrêmement limitée et ils ne sont utiles que pour étudier différentes variantes simples autour d'un même code très simple.
- Outils de contrôle/gestion de profils : ces outils permettent de récupérer (via des compteurs de matériel spécialisés) différentes informations relatives à l'exécution d'un programme : nombre de cycles, nombre de miss, etc.

On peut par ailleurs formuler les remarques suivantes :
- Les tests de performance évoluent peu et surtout sont devenus l'objet d'enjeux commerciaux trop importants. Très souvent, leur optimisation acharnée par les constructeurs fausse la portée et la validité des résultats obtenus.
- Simulateurs : l'exploitation de leurs résultats (pour l'optimisation de code) devient de plus en plus difficile dans la mesure où l'architecture ciblée est devenue très complexe.
- Modèles mathématiques : ils évoluent peu et en dehors de l'usage local mentionné ci-dessus, ils sont inutilisables. Une des raisons en est que les bons outils mathématiques de modélisation présupposent un comportement "uniformément moyenné", ce qui est loin d'être le cas en pratique.
- Outils de contrôle/gestion des profils : ils souffrent essentiellement de trois défauts : ils donnent une information globale et non pas une distribution de l'activité au cours du temps ; ils ne permettent pas de corréler code et comportement au niveau fin ; enfin, leur exploitation (comme dans le cas du simulateur) est très délicate, en raison notamment de la complexité de l'architecture ciblée.

La présente invention vise à remédier aux inconvénients précités et à permettre, pour une plate-forme matérielle prédéfinie comportant au moins un processeur, de générer de façon automatique des codes optimisés opérationnels sur cette plate-forme pour un domaine d'application prédéterminé à partir de codes sources soumis par des utilisateurs.

De façon plus particulière, l'invention vise à accroître les performances de systèmes informatiques de façon indépendante du choix du langage source et ceci pour des systèmes mettant en oeuvre des processeurs dont l'architecture peut faire appel à des instructions simples ou complexes et qui peuvent comprendre un nombre plus ou moins important de registres, d'unités fonctionnelles et de niveaux de cache.

L'invention a également pour objet d'éviter les limitations de la couverture fonctionnelle des bibliothèques de programmes spécialisées et vise à créer un système de génération automatique de codes optimisés pour un grand nombre de structures de code voisines, qui peuvent présenter différents niveaux de complexité.

Ces buts sont atteints, conformément à l'invention, grâce à un système de génération automatique de codes optimisés opérationnels sur une plate-forme matérielle prédéfinie comportant au moins un processeur, pour un domaine d'application prédéterminé à partir de codes sources soumis par des utilisateurs, caractérisé en ce qu'il comprend des moyens de réception de séquences de codes symboliques dites séquences-étalons représentatives du comportement dudit processeur en termes de performances, pour le domaine d'application prédéterminé ; des moyens de réception de paramètres statiques définis à partir de la plate-forme matérielle prédéfinie, de son processeur et des séquences-étalons ; des moyens de réception de paramètres dynamiques également définis à partir de la plate-forme matérielle prédéfinie, de son processeur et des séquences-étalons; un dispositif d'analyse pour établir des règles d'optimisation à partir de tests et de mesures de performances établis à partir des séquences-étalons, des paramètres statiques et des paramètres dynamiques ; un dispositif d'optimisation et génération de code recevant d'une part les séquences-étalons et d'autre part les règles d'optimisation pour examiner les codes sources d'utilisateurs, détecter des boucles optimisables, décomposer en noyaux, assembler et injecter des codes pour délivrer des codes optimisés ; et des moyens pour réinjecter dans les séquences-étalons des informations issues du dispositif de génération et optimisation de codes et relatives à des noyaux.

De façon plus particulière, le dispositif d'analyse comprend un générateur de tests relié d'une part aux moyens de réception de séquences-étalons et d'autre part aux moyens de réception de paramètres statiques pour générer automatiquement un nombre élevé de variantes de tests qui sont transférées par des moyens de transfert pour être stockées dans une base des variantes ; un exerciseur relié d'une part à des moyens de transfert pour recevoir les variantes de tests stockées dans la base des variantes et d'autre part aux moyens de réception de paramètres dynamiques pour exécuter les variantes de tests dans une plage de variation des paramètres dynamiques et produire des résultats qui sont transférés par des moyens de transfert pour être stockés dans une base des résultats ; et un analyseur relié à des moyens de transfert pour recevoir les résultats stockés dans la base des résultats, analyser ceux-ci et en déduire des règles d'optimisation qui sont transférées par des moyens de transfert dans une base de règles d'optimisation.

Avantageusement, l'analyseur comprend des moyens de filtrage à un seuil arbitraire de la performance optimale, de manière à considérer une variante de la base des résultats comme optimale dans l'espace des paramètres dès lors qu'elle satisfait aux critères de filtrage.

Selon un mode de réalisation préférentiel, l'analyseur comprend en outre des moyens de modification des paramètres statiques et des moyens de modification des paramètres dynamiques.

Le dispositif d'optimisation et génération de code comprend un dispositif de génération de code optimisé et un optimiseur, ce dernier comprenant un module de choix de stratégie relié d'une part aux moyens de réception des noyaux identifiés dans les codes sources d'origine, d'autre part aux moyens de réception de séquences-étalons et d'autre part à des moyens de réception de règles d'optimisation pour générer, pour chaque noyau correspondant à une séquence-étalon testée une pluralité de versions dont chacune est optimale pour une certaine combinaison de paramètres, et un module de combinaison et d'assemblage relié aux moyens de réception de règles d'optimisation, à des moyens de réception d'informations issues du module de choix de stratégie et à des moyens de réception de la pluralité des versions, pour délivrer à travers des moyens de transfert des informations comprenant les versions optimisées correspondantes, leur zone d'utilisation et le cas échéant le test à exécuter pour déterminer dynamiquement la version la plus adaptée.

Selon un mode de réalisation optionnel préférentiel, le système comprend une base des noyaux optimisés et le module de combinaison et d'assemblage est relié à la base des noyaux optimisés par des moyens de transfert pour stocker dans cette base des noyaux optimisés les informations comprenant les versions optimisées, leur zone d'utilisation et le cas échéant le test à exécuter pour déterminer dynamiquement la version la plus adaptée.

Le dispositif d'optimisation et génération de code comprend un optimiseur et un dispositif de génération de code optimisé, ce dernier comprenant un module de détection de boucles optimisables qui est relié à des moyens de réception des codes sources d'utilisateurs, un module de décomposition en noyaux, un module d'analyse de cas, d'assemblage et d'injection de code qui est relié à travers des moyens de transfert à l'optimiseur pour transmettre identification du noyau détecté et des moyens de transfert pour recevoir les informations décrivant le noyau optimisé correspondant, le module d'analyse de cas, d'assemblage et d'injection de code étant en outre relié à des moyens de fourniture des codes optimisés.

Le module d'analyse de cas, d'assemblage et d'injection de code peut en outre être relié à la base des noyaux optimisés pour recevoir les informations décrivant un noyau optimisé sans invoquer l'optimiseur si le noyau recherché y a été stocké.

Selon une caractéristique avantageuse, le module d'analyse de cas, d'assemblage et d'injection de code comprend en outre des moyens pour rajouter aux séquences-étalons des noyaux qui ont été mis en évidence dans ce module d'analyse de cas, d'assemblage et d'injection de code sans avoir d'identification correspondante dans la base des noyaux optimisés, ni dans les séquences-étalons.

Selon un mode de réalisation particulier, le système comprend un compilateur et un éditeur de liens pour recevoir un code source remanié issu du dispositif d'optimisation et génération du code et produire un code binaire optimisé adapté à la plate-forme matérielle.

Le système peut comprendre des moyens pour transférer du code source des noyaux optimisés de la base des noyaux optimisés vers le compilateur.

Selon une autre variante de réalisation, le système peut comprendre un compilateur et un module d'installation pour installer sur la plate-forme matérielle une bibliothèque dynamique contenant l'ensemble des fonctionnalités des noyaux optimisés.

L'invention peut s'appliquer à différents domaines d'application et notamment au calcul scientifique, au traitement de signal et au traitement graphique.

Selon une caractéristique particulière, les séquences-étalons comprennent un ensemble de codes de type boucle simples et génériques spécifiés dans un langage de type source et organisés en niveaux de manière hiérarchique par ordre de complexité croissante du code du corps de boucle.

Dans ce cas, les séquences-étalons comprennent des séquences-étalons de niveau 0 dans lesquelles une seule opération élémentaire est testée et correspond à un corps de boucle constitué d'une seule expression arithmétique représentée par un arbre de hauteur 0.

En supplément, les séquences-étalons peuvent comprendre des séquences-étalons de niveau 1 pour lesquelles sont considérées et testées les combinaisons de deux opérations de niveau 0, les opérations des séquences-étalons de niveau 1 correspondant à des corps de boucles constitués soit d'une seule expression arithmétique représentée par un arbre de hauteur 1, soit de deux expressions arithmétiques, chacune étant représentée par un arbre de hauteur 0.

Selon un mode de réalisation possible, les séquences-étalons comprennent en outre des séquences-étalons de niveau 2 pour lesquelles sont considérées et testées les combinaisons de deux opérations de niveau 1 ou de trois opérations de niveau 0.

Les paramètres statiques comprennent notamment le nombre d'itérations de la boucle pour chaque séquence-étalon, le pas d'accès aux tableaux et le type d'opérande, le type d'instructions utilisées, les stratégies de préchargement, les stratégies d'ordonnancement des instructions et des itérations

Les paramètres dynamiques comprennent notamment la localisation des opérandes tableaux dans les différents niveaux de la hiérarchie mémoire, la position relative des adresses de départ des tableaux et l'historique des branchements.

Avantageusement, la base des noyaux optimisés comprend des séquences de code source de type boucle correspondant à des fragments de code réel et utile et organisés en niveaux par ordre de complexité croissante.

La plate-forme matérielle prédéfinie peut comporter par exemple au moins un processeur du type dénommé Itanium™ de la société INTEL ou au moins un processeur du type Power ou Power PC™ de la société IBM.

Selon un mode de réalisation possible applicable plus particulièrement aux systèmes comportant un processeur de type ITANIUM™, les règles d'optimisation comprennent au moins certaines des règles suivantes :
(a) minimiser le nombre d'Ecritures en cas de mauvaise performance des Ecritures par rapport aux Lectures,
(b) importance de l'utilisation des paires de chargement en virgule flottante,
(c) ajuster le degré de déroulage en fonction de la complexité du corps de boucle,
(d) utiliser les latences opérationnelles des opérations arithmétiques,
(e) appliquer des techniques de masquage pour les vecteurs courts,
(f) utiliser des suffixes de localité pour les accès mémoire (Lecture, Ecriture, Préchargement),
(g) définir les distances de Préchargement,
(h) effectuer une vectorisation de degré 4 pour éviter une partie des conflits de bancs L2,
(i) prendre en compte de multiples variantes pour éviter une autre partie des conflits de bancs L2 et les conflits dans la file d'attente des Lectures/Ecritures,
(j) prendre en compte les gains de performances liés aux différentes optimisations,
(k) utiliser des chaînes de branchement minimisant les mauvaises prédictions (vecteurs courts),
(l) fusionner les accès mémoires (regroupement de pixels),
(m) vectoriser les traitements sur pixels.

Selon un autre mode de réalisation possible applicable plus particulièrement aux systèmes comportant un processus de type Power ou Power PC™, les règles d'optimisation comprennent au moins certaines des règles suivantes :
(a) réordonnancer les Lectures pour regrouper les défauts de caches,
(b) utiliser le préchargement uniquement sur les Ecritures,
(c) ajuster le degré de déroulage en fonction de la complexité du corps de boucle,
(d) utiliser les latences opérationnelles des opérations arithmétiques,
(e) utiliser des suffixes de localité pour les accès mémoire (Lecture, Ecriture, Préchargement),
(f) définir les distances de Préchargement,
(g) prendre en compte de multiples variantes pour éviter les conflits dans les files d'attente Lecture/Ecriture,
(h) prendre en compte les gains de performances liés aux différentes optimisations.

D'autres caractéristiques et avantages de l'invention ressortiront de la description suivante de modes particuliers de réalisation, faite en référence aux dessins annexés, sur lesquels :
- la Figure 1 est un schéma-bloc montrant l'ensemble des modules d'un système de génération automatique de codes optimisés selon l'invention,
- la Figure 2 est un schéma-bloc montrant de façon plus détaillée la constitution d'un module d'analyse de performances pouvant être mis en oeuvre dans le système de la Figure 1,
- la Figure 3 est un schéma-bloc montrant de façon plus détaillée la constitution d'un module d'optimisation et de génération de code pouvant être mis en oeuvre dans le système de la Figure 1,
- la Figure 4 est un schéma bloc montrant un premier exemple de module de génération de code source remanié, associé à des moyens d'obtention de code binaire optimisé pour la plate-forme cible concernée, et
- la Figure 5 est un schéma bloc montrant un deuxième exemple de module de génération de code source remanié, associé à des moyens d'obtention de code binaire optimisé pour la plate-forme cible concernée.

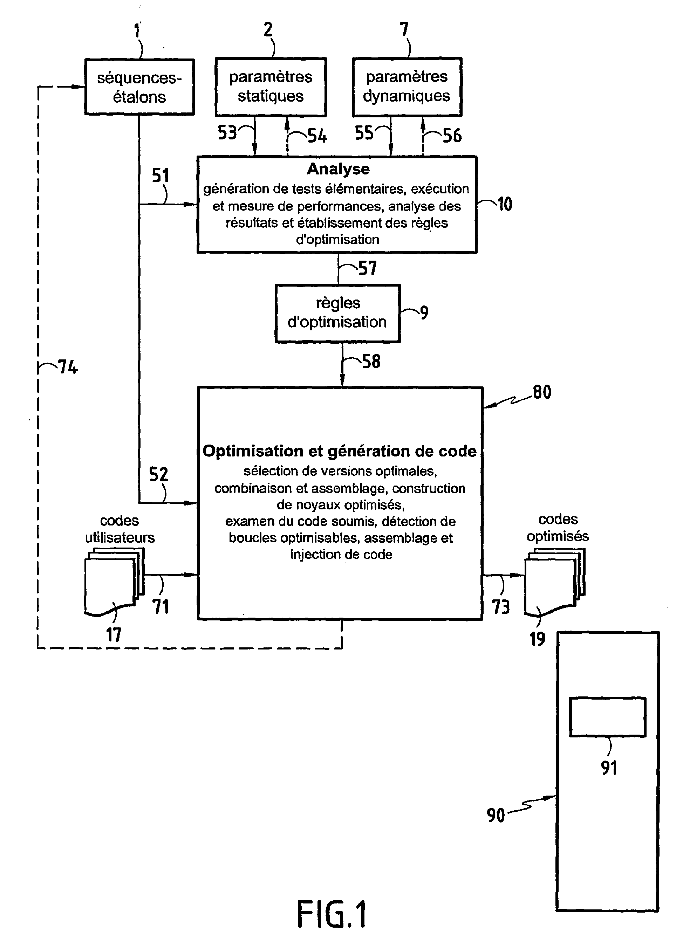

On se référera tout d'abord à la Figure 1 qui montre l'ensemble du système de génération automatique de code optimisé pour fournir, sur une sortie 73 d'un module 80 d'optimisation et de génération de code, des codes optimisés opérationnels sur une plate-forme matérielle 90 prédéfinie comportant au moins un processeur 91.

Le système de génération de code optimisé est adapté à un domaine d'application déterminé et reçoit, par une entrée 71 du module 80, des codes sources 17 soumis par des utilisateurs, le terme utilisateurs devant s'entendre au sens large et incluant notamment les utilisateurs finaux, les programmeurs d'applications ou les programmeurs systèmes.

Des séquences de code symboliques dites séquences-étalons 1 représentatives du comportement du processeur 91 en termes de performances pour le domaine d'application considéré, sont appliquées sur une entrée 52 du module 80 d'optimisation et de génération de code et sur une entrée 51 d'un module d'analyse 10.

L'analyse de l'effet des divers paramètres de l'environnement et de l'interaction entre séquences-étalons permet de situer les zones de bonnes et mauvaises performances et d'en appréhender les raisons. Les séquences-étalons ne représentent pas forcément des séquences de code réel généré par les langages de programmation classiques. Seul un sous-ensemble des séquences-étalons testées correspond à des noyaux utilisés pour l'optimisation du code utilisateur.

Une boucle optimisable est une construction de programme codant la représentation algorithmique d'une opération plus ou moins complexe sur des variables-vecteurs.

Un noyau ou boucle élémentaire constitue une forme simple de boucle optimisable. Le module 80 du système selon l'invention permet de générer automatiquement un nombre de noyaux optimisés sensiblement supérieur au nombre de fonctions offertes par les bibliothèques spécialisées mathématiques. En général, plusieurs versions d'un même noyau peuvent être générées, chaque version étant optimisée pour une certaine combinaison de paramètres d'environnement.

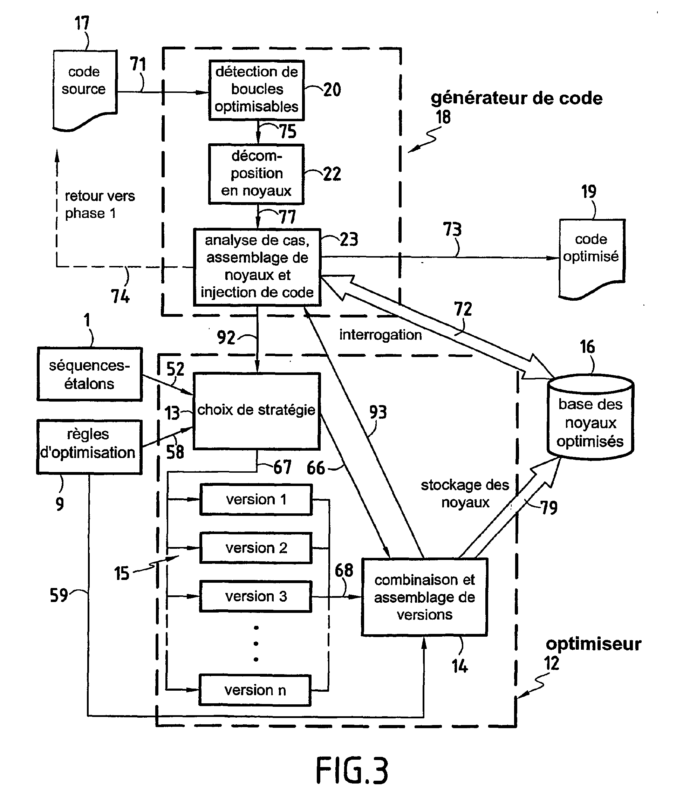

La phase d'optimisation dans un optimiseur 12 (Figure 3) consiste ainsi en la génération automatique d'un ensemble ou bibliothèque de noyaux optimisés pour la plate-forme cible 90 représentant des fonctionnalités représentatives du domaine d'application.

La phase d'optimisation est associée à une phase de génération de code dans un générateur de code 18 (Figure 3) qui examine le code source du programme utilisateur pour y détecter les boucles optimisables afin de forcer l'utilisation de noyaux optimisés en lieu et place du code qu'aurait généré le compilateur standard.

Des moyens 74 sont prévus pour réinjecter dans les séquences-étalons 1 les informations issues du module 80.

Les phases d'optimisation et de génération de code sont précédées par une phase d'analyse dans un module d'analyse 10 qui sert à déterminer, pour la plate-forme matérielle cible 90 et le domaine d'application considéré, les règles d'optimisation à respecter pour obtenir des performances optimales. Une sortie 57 du module d'analyse 10 permet le transfert des règles d'optimisation vers une base 9 de règles d'optimisation elle-même reliée, par des moyens de transfert 18, à l'optimiseur 12 du module 80.

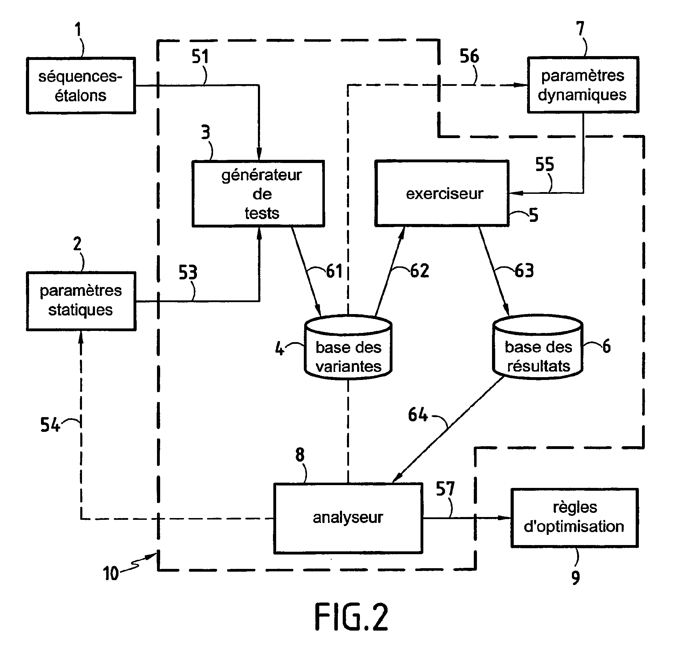

On décrira maintenant de façon plus particulière le module d'analyse 10 en référence à la Figure 2.

Des paramètres statiques 2 et des paramètres dynamiques 7, identifiés en fonction de l'architecture du processeur 91, et plus généralement du système qui est à la base de la plate-forme 90 cible de l'optimisation, et également en fonction des séquences-étalons, sont appliqués par des moyens 53, 54 au module d'analyse 10.

Les paramètres statiques 2 peuvent comprendre notamment le nombre d'itérations de la boucle pour chaque séquence-étalon, le pas d'accès aux tableaux et le type d'opérande, le type d'instructions utilisées, les stratégies de préchargement, les stratégies d'ordonnancement des instructions et des itérations.

Les paramètres dynamiques 7 peuvent comprendre notamment la localisation des opérandes tableaux dans les différents niveaux de la hiérarchie mémoire, la position relative des adresses de départ des tableaux et l'historique des branchements.

Dans le module 10 d'analyse de performances, un générateur de test 3 exploite les données relatives aux paramètres statiques 2 et dynamiques 7, qui lui sont fournies par les entrées 51, 53 pour générer un nombre potentiellement très élevé de variantes qui sont transférées par des moyens de transfert 61 vers une base de données des variantes 4.

Un autre outil automatique 5 dénommé exerciseur reçoit, par des moyens de transfert 62, les données des variantes et la base des variantes 4, met en oeuvre les tests ainsi fabriqués, les exécute en faisant varier dans leur plage de variation les paramètres dynamiques 7 fournis par les moyens de transfert 55 et transfère, par des moyens de transfert 63, les mesures pertinentes vers une autre base de données 6 dénommée base des résultats.

Les mesures stockées dans la base des résultats 6 sont elles-mêmes transférées, par des moyens de transfert 64, vers un analyseur 8 qui, à partir de l'identification des zones de bonne et mauvaise performance en fonction du paramètrage, permet la formulation des règles d'optimisation 9 qui sont transférées par les moyens de transfert 57 dans la base 9 de règles d'optimisation.

L'analyseur 8 comprend également des moyens 54 de modification des paramètres statiques 2 et des moyens 56 de modification des paramètres dynamiques, par exemple s'il a été constaté une faible sensibilité aux variations d'un paramètre donné.

L'analyseur 8 peut comprendre des moyens de filtrage à un seuil arbitraire de la performance optimale. Dans ce cas, une variante de la base des résultats qui ne correspond pas à des performances optimales peut néanmoins être retenue comme optimale dans l'espace des paramètres, dès lors qu'elle satisfait aux critères de filtrage.

On décrira maintenant le module 80 d'optimisation et de génération de code en référence à la Figure 3.

Le dispositif d'optimisation 12 comprend un module 13 de choix de stratégie relié au module 18 de génération de code par des moyens 92 de réception des noyaux identifiés dans les codes sources d'origine. Le module 13 de choix de stratégie est en outre relié à des moyens 52 de réception de séquences-étalons 1 et à des moyens 58 de réception de règles d'optimisation 9. Le module 13 de choix de stratégie génère à sa sortie 67, pour chaque noyau correspondant à une séquence-étalon testée, un ensemble 15 de n versions dont chacune est optimale pour une certaine combinaison de paramètres.

Un module 14 de combinaison et d'assemblage de versions est relié aux moyens 59 de réception de règles d'optimisation 9, à des moyens 66 de réception d'informations issues du module de choix de stratégie 13 et à des moyens 68 de réception de la pluralité 15 de versions 1 à n. Le module 14 délivre à travers des moyens de transfert 93 des informations comprenant les versions optimisées correspondantes, leur zone d'utilisation et le cas échéant le test à exécuter pour déterminer dynamiquement la version la plus adaptée.

Le module 18 de génération de code optimisé comprend un module 20 de détection de boucles optimisables qui est relié à des moyens 71 de réception des codes sources 17 d'utilisateurs. La sortie 75 du module 20 est reliée à un module 22 de décomposition en noyaux dont la sortie 77 est elle-même reliée à un module 23 d'analyse de cas, d'assemblage et d'injection de code qui est relié, à travers des moyens de transfert 92, à l'optimiseur 12 pour transmettre l'identification du noyau détecté. Le module 23 reçoit par ailleurs, par des moyens de transfert 93, les informations décrivant le noyau optimisé correspondant. Le module 23 est aussi relié à des moyens 73 de fourniture des codes optimisés 19.

Selon une variante de réalisation avantageuse, le module 80 d'optimisation et de génération de code comprend une base des noyaux optimisés 16. Le module de combinaison et d'assemblage 14 est relié à la base des noyaux optimisés 14 par des moyens de transfert 79 pour stocker dans cette base des noyaux optimisés les informations comprenant les versions optimisées, leur zone d'utilisation et le cas échéant le test à exécuter pour déterminer dynamiquement la version la plus adaptée. Selon cette variante, le module 23 d'analyse de cas, d'assemblage et d'injection de code est en outre relié à la base 16 des noyaux optimisés par les moyens de transfert 72 pour recevoir les informations décrivant un noyau optimisé, sans invoquer l'optimiseur 12, si le noyau recherché a déjà été stocké dans cette base 16.

Comme on peut le voir sur la Figure 3, le module 23 d'analyse de cas, d'assemblage et d'injection de code comprend en outre des moyens 74 pour rajouter aux séquences-étalons 1 des noyaux qui ont été mis en évidence dans ce module 23 sans avoir l'identification correspondante dans la base 16 des noyaux optimisés, ni dans les séquences-étalons.

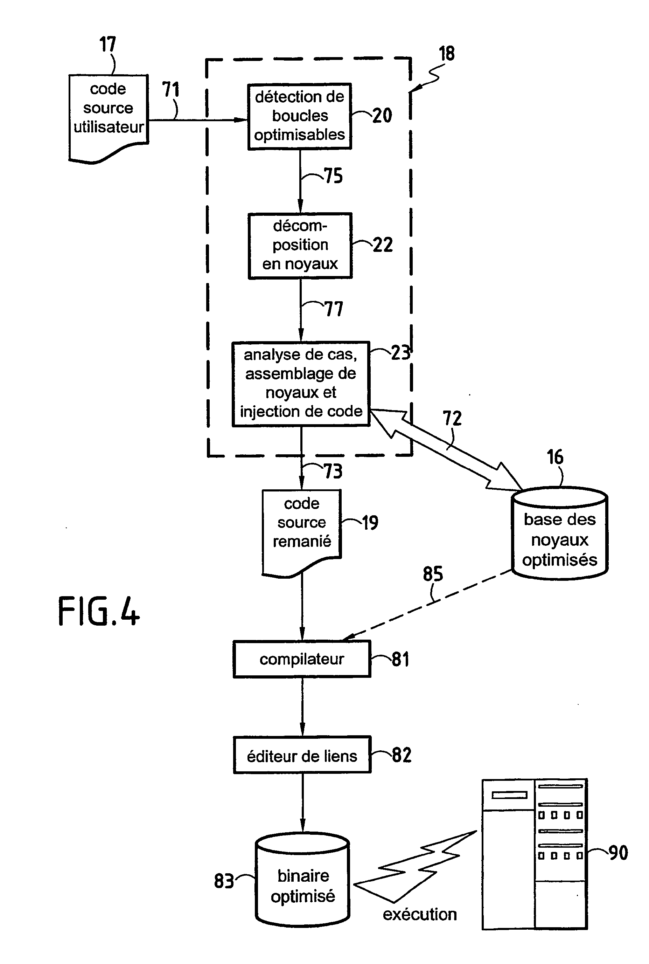

La Figure 4 montre un exemple particulier de réalisation pour lequel on n'a pas représenté l'optimiseur 12 qui reste identique à la variante de la Figure 3 selon laquelle il existe une base 16 des noyaux optimisés.

Dans cet exemple de réalisation, le module 18 de génération de code produit en sortie 73 du module 23 d'analyse de cas, d'assemblage et d'injection de code, un code source remanié 19 qui est ensuite traité par des outils classiques de préparation de programme 81, 82 pour l'obtention de code binaire 83 optimisé pour la plate-forme cible 90.

La Figure 4 représente un exemple de réalisation qui peut être très facilement mis en oeuvre. Le code source utilisateur d'origine 17 a été remanié au sein du module 80 d'optimisation et de génération de code déjà décrit plus haut, de telle manière que les boucles optimisables soient remplacées par des appels à des sous-programmes, le code correspondant à ces sous-programmes étant injecté dans le code source remanié 19 depuis la base des noyaux optimisés 16. Le code source 19 ainsi remanié contient alors tout le nécessaire pour générer un code binaire optimisé 83 adapté à la plate-forme matérielle 90, par un passage dans une chaîne classique comprenant un compilateur 81 et un éditeur de liens 82.

Selon une variante possible, du code source des noyaux optimisés de la base des noyaux optimisés 16 peut être utilisé directement dans l'étape de compilation en tant que bibliothèque source d'appoint. Ceci est symbolisé sur la Figure 4 par la flèche en pointillés 85 qui relie la base des noyaux optimisés 16 au compilateur 81. Cette variante permet ainsi d'éviter l'injection directe de ce code source des noyaux optimisés dans le code source remanié et allège l'étape de génération au sein du module 18.

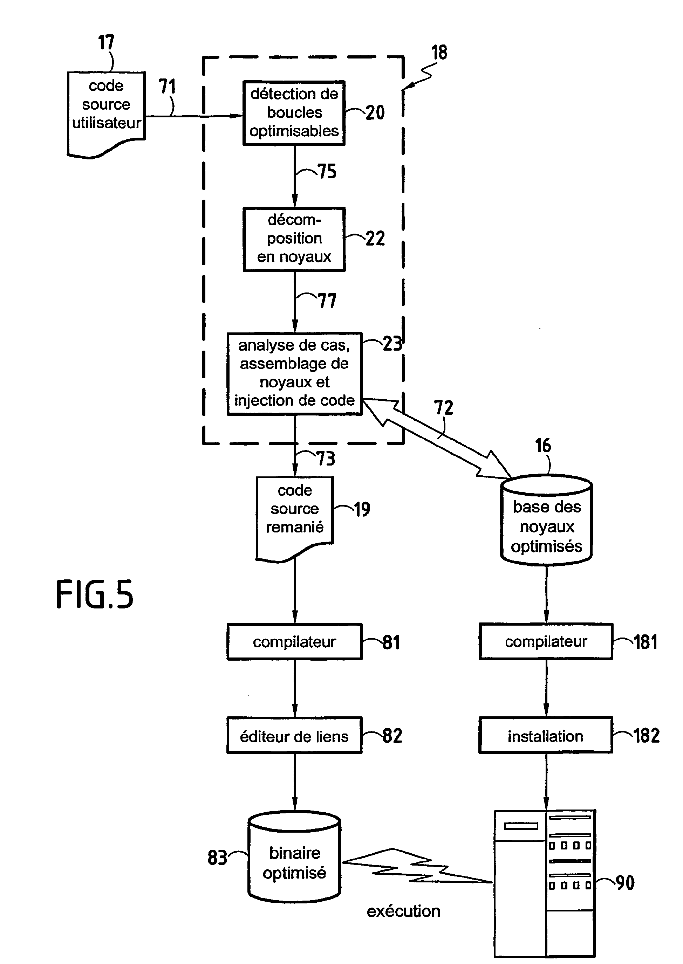

La Figure 5 représente une autre variante de réalisation de l'exemple de réalisation de la Figure 4.

La variante de la Figure 5 exploite la possibilité qu'offrent certains systèmes d'exploitation d'installer des bibliothèques sous forme de codes binaires exécutables et accessibles par des programmes par édition de liens dynamiques au moment de leur exécution.

Dans le cas de la variante de la Figure 5, il n'est pas non plus nécessaire d'injecter de code depuis la base des noyaux optimisés 16 vers le code source remanié 19. En revanche, une bibliothèque dynamique contenant l'ensemble des fonctionnalités des noyaux optimisés doit être installée sur la plate-forme cible 90 par l'intermédiaire d'un compilateur 181 et d'un module d'installation 182. On peut utiliser un seul compilateur commun pour les compilateurs 81 et 181 de la Figure 5. Dans cette variante de la Figure 5, l'opération d'installation n'est nécessaire qu'une seule fois pour chaque plate-forme cible, de sorte que cette variante est la plus économe en termes de traitement global du processus d'optimisation.

La mise en oeuvre d'un système de génération de code optimisé selon l'invention s'applique particulièrement bien aux trois domaines que sont le calcul scientifique, le traitement du signal et le traitement graphique.

En effet, les codes utilisés dans ces trois domaines présentent plusieurs caractéristiques CAR1 à CAR4 qui sont importantes pour cette mise en oeuvre.
○ CAR 1 : Les structures de type boucle (ou « nids de boucle ») constituent les portions de code les plus consommatrices en termes de temps d'exécution
○ CAR 2 : Les structures de données utilisées sont en majeure partie de type tableau multidimensionnel et sont accédées suivant des motifs très réguliers (lignes, colonnes, blocs, etc.)
○ CAR 3 : Les boucles (ou nids de boucles) sont en général constituées d'itérations indépendantes et parallélisables
○ CAR 4 : Le corps de la boucle est en général constitué d'une séquence d'expressions arithmétiques et correspond à un calcul uniforme (ou quasi-uniforme) sur un grand volume de données.

Naturellement, si ces trois domaines du calcul scientifique, du traitement de signal et du traitement graphique possèdent des points communs, ils présentent aussi certaines différences fortes. Ainsi dans le domaine du traitement de signal, les données de type complexe constituent un type de données extrêmement important qui requiert des optimisations spécifiques tandis que l'importance de ce type de données est marginale dans les deux autres domaines. Le traitement graphique quant à lui est fortement marqué par l'utilisation d'un type de données particulier, les pixels, et d'une arithmétique spéciale. De plus en graphique, la structuration des données et des algorithmes par rapport à un écran bidimensionnel est fondamentale.

Les quatre caractéristiques ci-dessus (CAR1 à CAR4) ont des conséquences très fortes pour l'optimisation de code et permettent le développement de techniques complètement spécifiques:
○ CAR 1 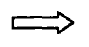 les optimisations vont en fait se concentrer sur les structures de type « boucle » qui présentent deux avantages majeurs : répétitivité (et prédictibilité) et compacité de représentation.
○ CAR 2 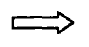 les accès aux tableaux qui représentent une part importante (voire majeure en raison de l'utilisation croissante des caches) des temps d'exécution vont pouvoir facilement être analysés et optimisés en raison de leur régularité.
○ CAR 3 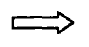 l'indépendance des itérations au sein d'une boucle et de nids de boucles, va permettre l'utilisation (l'optimisation) de parcours de l'espace d'itération en fonction des accès aux tableaux et ce suivant les caractéristiques propres de l'architecture cible. On peut remarquer qu'accéder à N éléments donnés d'un tableau peut être réalisé de N ! manières (ordres) différentes.
○ CAR 4 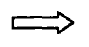 la structure simple du corps de boucles en termes d'expressions arithmétiques va nous permettre d'utiliser une approche systématique et hiérarchique s'appuyant sur la représentation sous forme d'arbres d'une expression arithmétique.

La phase d'analyse reste une phase essentiellement expérimentale à l'issue de laquelle il faut :
• avoir déterminé les points forts et les points faibles de l'architecture,
• savoir corréler performance et structure de code,
• avoir identifié les bonnes stratégies d'optimisation, celles ci pouvant être fonction de différents paramètres liés au code.

Comme on l'a déjà indiqué, le point de départ est un ensemble de codes « de type source » simples mais génériques appelés « séquences-étalons ». Ces codes ont une structure de type boucle, le terme « type source » indiquant que les opérations sont spécifiées à haut niveau et non au niveau assembleur.

Ces codes sont organisés en niveaux de manière hiérarchique par ordre de complexité croissante du code du corps de boucle de la manière suivante :
• SEQUENCE-ETALON NIVEAU 0 : à ce niveau, une seule opération élémentaire est testée, c'est-à-dire que le corps de boucle comporte une seule opération : lecture d'un élément de tableau, écriture d'un élément de tableau, addition flottante, etc. Ces opérations correspondent à des corps de boucle constitué d'une seule expression arithmétique représentée par un arbre de hauteur 0.
• SEQUENCE-ETALON NIVEAU 1 : à ce niveau, sont considérées et testées les combinaisons de deux opérations de niveau 0 : lecture et écriture d'un tableau, lecture de deux tableaux différents, lecture et addition sur un tableau etc. Ces opérations correspondent à des corps de boucles constitués soit d'une seule expression arithmétique représentée par un arbre de hauteur 1, soit deux expressions arithmétiques, chacune étant représentée par un arbre de hauteur 0.
• SEQUENCE-ETALON NIVEAU 2 : à ce niveau les combinaisons de deux opérations de niveau 1 ou de trois opérations de niveau 0 sont considérées et testées : lecture de trois tableaux différents, lecture et addition de deux tableaux composante à composante et écriture du résultat dans un troisième tableau etc.
• SEQUENCE-ETALON NIVEAU K : le niveau K peut être aisément défini par récurrence à partir des niveaux précédents.

Toutes les séquences-étalons de niveau 0 correspondent à des codes qui sont « artificiels », i.e. ne traduisent pas des boucles « réelles ».

Cette organisation en niveaux de complexité croissante est aussi utilisée dans la phase d'optimisation.

L'ensemble des séquences-étalons ainsi défini est infini.

Ces séquences-étalons utilisent deux classes de paramètres différents :
• Paramètres statiques : ces paramètres sont définis de manière statique (c'est-à-dire avant exécution et indépendamment de l'exécution). Ces paramètres statiques sont eux mêmes subdivisés en deux grandes sous classes : paramètres statiques de haut niveau (nombre d'itérations de la boucle, pas d'accès aux tableaux, type d'opérande,...), paramètres statiques de bas niveau (utilisation d'instructions spécifiques, ordonnancement des instructions etc.)
• Paramètres dynamiques : ces paramètres sont définis lors de l'exécution de la boucle. Ils comprennent par exemple : localisation des opérandes tableaux dans la hiérarchie mémoire, position relative des adresses de départ des tableaux,...

Ces deux classes de paramètres sont exploitées de manière très différente : les paramètres statiques seront utilisés pour générer les différents codes tests en combinaison avec les variantes/optimisations décrites ci-dessous, tandis que les paramètres dynamiques sont exclusivement utilisés lors de l'exécution sur le banc de test.

Les paramètres statiques de haut niveau sont relativement limités et correspondent essentiellement aux paramètres classiques d'une boucle et de tableaux exprimés dans un langage haut niveau (Fortran ou C par exemple) sans aucune spécificité provenant du processeur cible.

Les paramètres statiques de bas niveau vont permettre de prendre en compte toutes les spécificités liées au processeur (architecture) et à l'ordonnancement des instructions (générateur de code objet). En effet, les séquences-étalons sont de fait des abstractions à haut niveau (définies dans un langage source, indépendantes de l'architecture du processeur visé) et n'intègrent en particulier aucune optimisation. Pour les tester sur un processeur donné, il faut générer et optimiser les codes assembleurs correspondants. Lors de cette génération, plusieurs variantes (séquence d'instructions assembleurs) vont être générées automatiquement. Toutes les variantes associées à une même séquence-étalon sont des codes sémantiquement équivalents à la séquence-étalon de départ. Ce sont ces variantes qui vont être exécutées et mesurées. Ces variantes correspondent en fait à différentes techniques d'optimisation de code (c'est-à-dire à des paramètres statiques de bas niveau). Ces optimisations peuvent être définies de manière abstraite sans référence à la structure particulière d'une séquence-étalon et constituent l'essentiel des paramètres statiques de bas niveau.

Les paramètres statiques de bas niveau comportent :
• l'utilisation des instructions assembleurs: une même opération au niveau source peut être mise en oeuvre par différentes séquences d'instructions. En particulier, il faut traiter ici les différentes stratégies possibles pour utiliser le pré-chargement des données et des instructions.
• la structure du corps de boucle : déroulage (degré variable) du corps de boucle,
• l'ordonnancement du corps de boucle : ordonnancement des instructions du corps de boucle (distances de préchargement, vectorisation), regroupement des défaut de cache, traitement des conflits dans le files d'attente),
• l'ordonnancement des itérations : pipeline logiciel (profondeur variable)

Dans nombre de compilateurs, les paramètres statiques de bas niveau décrits ci-dessus correspondent à des options de compilation permettant de mettre en oeuvre de manière explicite l'optimisation visée.

Le rôle du générateur de test 3 est de générer les différentes variantes décrites ci-dessus correspondant d'une part aux paramètres statiques de haut niveau (par exemple, pas d'accès aux tableaux) et d'autre part aux paramètres statiques de bas niveau.

Il faut noter que pour des séquences-étalons de niveau 1, le nombre total de variantes à générer/analyser est extrêmement élevé et se chiffre à plusieurs millions. Malgré cela, le processus de génération et d'analyse peut être très simplement automatisé.

Au niveau de l'exerciseur 5 et de l'analyseur 8, il s'agit de tester les performances des différentes variantes et de sélectionner les meilleures variantes/optimisations possibles.

Cette phase implique la génération d'un grand nombre de résultats stockés dans la base de résultats 6. Les expérimentations sont effectuées de manière hiérarchique et entrelacée avec les phases d'analyse : ainsi les premières expérimentations sont effectuées sur les variantes des séquences-étalons de niveau 0. A l'issue de cette première campagne d'expérimentation, un premier tri sur les différentes variantes peut être effectué en fonction des résultats obtenus. Certaines variantes peuvent ainsi être tout de suite éliminées et ne seront plus considérées pour les niveaux suivants. Ceci permet de limiter l'explosion combinatoire du nombre d'expériences à réaliser.

La phase d'analyse des résultats est à première vue assez simple à effectuer car une seule métrique (performance) est utilisée. En fait une grande partie de la complexité du processus provient du fait qu'en général, le choix des meilleures variantes va très fortement dépendre des paramètres.

Un premier tri peut être réalisé de manière très simple en calculant d'après les spécifications de l'architecture, les performances optimales pour chacune des séquences-étalons. Par contre, des difficultés peuvent apparaître rapidement, liées aux interactions complexes entre architecture et codes (y compris pour des codes aussi simples que les séquences-étalons de niveau 0 et 1): ceci se traduit par des figures compliquées décrivant les variations de la performance en fonction des paramètres. Ces comportements complexes peuvent être d'abord analysés en utilisant des algorithmes de traitement d'image puis synthétisés en qualifiant une variante donnée pour une certaine plage de paramètre. Ainsi la phase d'analyse ne génère pas simplement une liste indiquant pour chaque séquence-étalon la meilleure (et unique) variante/technique d'optimisation : de fait pour chaque séquence-étalon, une liste de plages de paramètres est déterminée et, pour chacune de ces plages, la meilleure variante/technique d'optimisation est indiquée : c'est une telle information qui sera appelée « règle d'optimisation ».

L'ensemble des séquences-étalons testées est un sous-ensemble très restreint de l'ensemble des séquences-étalons. Cet ensemble qui est utilisé par la suite pour les optimisations est appelé « ensemble des séquences-étalons de référence ».

En pratique, il est très important de fixer un objectif « raisonnable » d'optimisation : ainsi chercher à tout prix l'optimum peut générer un nombre très élevé de variantes alors qu'en relâchant la contrainte d'optimum et en se contentant de performances dans un voisinage de 5 à 10% de l'optimum, une seule variante peut être utilisée pour une grande plage de paramètres. On procède pour cela à un filtrage par exemple à un seuil de 90% de la performance optimale.

En pratique, il suffit de tester et d'analyser seulement les niveaux 0, 1 et 2 des séquences-étalons pour dégager et valider les principales techniques d'optimisation. L'ensemble de référence des séquences-étalons ne contiendra pas en général de séquence de niveau supérieur à 3.

En effet, le volume d'expérimentations devient rapidement très élevé en particulier au-delà du niveau 2.

L'ensemble des expérimentations se prête de manière idéale à la parallélisation : les tests peuvent être exécutées en parallèle sur 100 ou 1000 machines. Cette propriété de parallélisation est extrêmement utile et permet d'effectuer des explorations systématiques et ceci dans des temps acceptables.

Cette phase est entièrement automatisable et les procédures de vérification de qualité et de cohérence des résultats peuvent être aussi automatisées. L'intervention humaine n'est requise que pour le relevé d'erreurs/anomalies découlant de l'analyse des résultats produits automatiquement par les procédures de vérification de qualité et de cohérence.

A l'issue de la phase d'analyse, l'objectif est de disposer d'un très grand nombre de codes simples dits « noyaux » spécifiquement optimisés pour l'architecture cible, ce processus d'optimisation s'appuyant de manière essentielle sur les techniques d'optimisation dégagées à l'issue de la phase d'analyse.

De manière stricte, les « noyaux » sont des séquences de code source de type boucle et constituent un sous-ensemble du cas général des séquences-étalons. A la différence de ces dernières, ils correspondent à des fragments de code réel et utile. Comme les séquences-étalons, ils sont organisés en niveaux par ordre de complexité croissante.

La génération/optimisation de ces noyaux se déroule suivant les quatre phases ci dessous :
○ Corrélation avec une ou plusieurs séquences-étalons de référence :
   pour les noyaux les plus simples, il y a une correspondance directe entre noyaux et séquences-étalons, pour les noyaux plus complexes, le noyau sera décomposé en plusieurs séquences-étalons de référence. Cette corrélation/décomposition est effectuée au niveau source en fonction des caractéristiques du corps de boucle du noyau : nombre de tableaux, pas d'accès aux tableaux, etc...
   ○ Génération de code/Ordonnancement d'instructions/optimisation destructions : il s'agit d'utiliser les techniques d'optimisation détectées lors de la phase d'analyse (en fonction des séquences-étalons correspondantes) et de les appliquer directement à la génération / optimisation de code pour les noyaux. Pour un même noyau, plusieurs versions possibles pourront être générées et ce en fonction des paramètres.
   ○ Allocations de registre : bon nombre des techniques d'optimisation utilisées accroissent de manière sensible la pression sur les registres disponibles. Dans ce cas, il convient d'aménager l'allocation de l'ensemble des registres disponibles.
   ○ Expérimentation/Validation : le noyau généré et optimisé est testé en utilisant le banc de test de la phase d'analyse. A l'issue de cette phase, un modèle simple des performances du noyau est construit.

Par rapport aux optimisations classiques utilisées dans un compilateur, les optimisations utilisées ici sont très différentes : tout d'abord elles sont dérivées directement d'un processus détaillé d'évaluation de performances (effectué lors de la phase d'analyse) ensuite elles sont beaucoup plus complexes et performantes (en particulier pour l'allocation de registres) car elles sont exécutées hors connexion sans « contrainte » de temps.

L'utilisation des séquences-étalons de référence et des règles de génération permettent de prendre en compte d'une part toutes les caractéristiques fines de l'architecture (caractéristiques opérationnelles mesurées et non théoriques) et d'autre part les différentes versions devant être sélectionnées en fonction des paramètres.

A l'issue de cette phase, il a été construit une base de données 16 des noyaux optimisés, contenant non seulement les codes générés mais aussi les informations relatives aux performances et ceci en fonction des différents paramètres. Chacun de ces noyaux est d'ailleurs testé suivant la procédure utilisée pour les séquences-étalons.

En pratique, la base 16 des noyaux optimisés comprend de manière systématique et exhaustive tous les noyaux de niveaux 1, 2, 3, 4 et 5. Le coût en termes de volume de calcul de la construction de cette base de données est important mais comme pour la phase analyse de performances, elle se parallélise très efficacement.

L'optimisation du code utilisateur se déroule en trois phases :
○ Détection des boucles optimisables (module 20) : il s'agit de reconnaître au sein du code source les boucles pouvant être décomposées en noyaux. Cette phase utilise des techniques très proches de celle des paralléliseurs/vectoriseurs automatiques. Au besoin, le code source est restructuré pour faire apparaître la boucle sous la forme la plus favorable à l'optimisation
○ Analyse de la boucle optimisable, décomposition en noyaux (module 22) : en s'appuyant sur des techniques d'appariement de configuration et de décomposition proches de celles utilisées pour l'optimisation des noyaux, la boucle est décomposée en une séquence de noyaux
○ Assemblage et injection de code (module 23) : les différents noyaux utilisés pour la décomposition sont assemblés et réinjectés dans le code source.

La procédure de décomposition est en général paramétrée en fonction de caractéristiques de la boucle source d'origine.

Les optimisations proposées peuvent être intégrées
○ soit par un pré-processeur dans un chaîne de compilation existante et ceci de manière transparente c'est-à-dire sans qu'il soit nécessaire d'avoir accès au code du compilateur,
○ soit directement dans un compilateur, ceci nécessitant bien sûr des modifications dans le code du compilateur.

Comme on l'a déjà indiqué plus haut en référence à la Figure 3, à l'issue de la phase d'analyse un certain nombre de règles d'optimisation sont disponibles : ces règles sont fonction de la séquence-étalon et de la plage de paramètre. Au lieu de passer par l'étape intermédiaire des noyaux, une variante possible est de corréler directement la boucle optimisable avec les séquences-étalons et d'appliquer directement les règles d'optimisation sur la boucle optimisable sans passer par le stockage de noyaux dans une base 16 des noyaux optimisés.

Cette variante est plus simple que le passage par les noyaux et elle permet une utilisation plus souple des règles d'optimisation. En revanche, du fait qu'elle est réalisée essentiellement en ligne, le nombre de variantes explorées sera nécessairement plus restreint et donc les performances obtenues seront a priori un peu moins bonnes.

A l'issue de la phase d'optimisation, le système a généré des formes optimisées pour un certain nombre de boucles « optimisables » qui a priori n'étaient pas directement disponibles dans la base des noyaux car elles avaient nécessité une décomposition. Ces formes optimisées peuvent être stockées dans la base 16 des noyaux optimisés et réutilisées par la suite. Ainsi, la base de données 16 des noyaux est enrichie automatiquement par cette forme d'apprentissage.

## Revendications

1. Système de génération automatique de codes optimisés (19) opérationnels sur une plate-forme matérielle prédéfinie (90) comportant au moins un processeur (91), pour un domaine d'application prédéterminé à partir de codes sources (17) soumis par des utilisateurs, **caractérisé en ce qu'**il comprend des moyens (51, 52) de réception de séquences de codes symboliques dites séquences-étalons (1) représentatives du comportement dudit processeur (91) en termes de performances, pour le domaine d'application prédéterminé ; des moyens (53) de réception de paramètres statiques (2) définis à partir de la plate-forme matérielle prédéfinie (90), de son processeur (91) et des séquences-étalons (1) ; des moyens (55) de réception de paramètres dynamiques (7) également définis à partir de la plate-forme matérielle prédéfinie (90), de son processeur (91) et des séquences-étalons (1) ; un dispositif d'analyse (10) pour établir des règles d'optimisation (9) à partir de tests et de mesures de performances établis à partir des séquences-étalons (1), des paramètres statiques (2) et des paramètres dynamiques (7) ; un dispositif (80) d'optimisation et génération de code recevant d'une part les séquences-étalons (1) et d'autre part les règles d'optimisation (9) pour examiner les codes sources (17) d'utilisateurs, détecter des boucles optimisables, décomposer en noyaux, assembler et injecter des codes pour délivrer des codes optimisés (19) ; et des moyens (74) pour réinjecter dans les séquences-étalons (1) des informations issues du dispositif (80) de génération et optimisation de codes et relatives à des noyaux.

2. Système selon la revendication 1, **caractérisé en ce que** le dispositif d'analyse (10) comprend un générateur de tests (3) relié d'une part aux moyens (51) de réception de séquences-étalons et d'autre part aux moyens (53) de réception de paramètres statiques pour générer automatiquement un nombre élevé de variantes de tests qui sont transférées par des moyens de transfert (61) pour être stockées dans une base des variantes (4) ; un exerciseur (5) relié d'une part à des moyens de transfert (62) pour recevoir les variantes de tests stockées dans la base des variantes (4) et d'autre part aux moyens (55) de réception de paramètres dynamiques pour exécuter les variantes de tests dans une plage de variation des paramètres dynamiques (7) et produire des résultats qui sont transférés par des moyens de transfert (63) pour être stockés dans une base des résultats (6) ; et un analyseur (8) relié à des moyens de transfert (64) pour recevoir les résultats stockés dans la base des résultats (6), analyser ceux-ci et en déduire des règles d'optimisation qui sont transférées par des moyens de transfert (57) dans une base de règles d'optimisation (9).

3. Système selon la revendication 2, **caractérisé en ce que** l'analyseur (8) comprend des moyens de filtrage à un seuil arbitraire de la performance optimale, de manière à considérer une variante de la base des résultats comme optimale dans l'espace des paramètres dès lors qu'elle satisfait aux critères de filtrage.

4. Système selon la revendication 2 ou la revendication 3, **caractérisé en ce que** l'analyseur (8) comprend en outre des moyens (54) de modification des paramètres statiques (2) et des moyens (56) de modification des paramètres dynamiques (7).

5. Système selon l'une quelconque des revendications 1 à 4, **caractérisé en ce que** le dispositif (80) d'optimisation et génération de code comprend un dispositif (18) de génération de code optimisé et un optimiseur (12), ce dernier comprenant un module de choix de stratégie (13) relié d'une part aux moyens (92) de réception des noyaux identifiés dans les codes sources d'origine, d'autre part aux moyens (52) de réception de séquences-étalons (1) et d'autre part à des moyens (58) de réception de règles d'optimisation (9) pour générer, pour chaque noyau correspondant à une séquence-étalon testée une pluralité de versions (15) dont chacune est optimale pour une certaine combinaison de paramètres, et un module de combinaison et d'assemblage (14) relié aux moyens (59) de réception de règles d'optimisation (9), à des moyens (66) de réception d'informations issues du module de choix de stratégie (13) et à des moyens (68) de réception de la pluralité des versions (15), pour délivrer à travers des moyens de transfert (93) des informations comprenant les versions optimisées correspondantes, leur zone d'utilisation et le cas échéant le test à exécuter pour déterminer dynamiquement la version la plus adaptée.

6. Système selon la revendication 5, **caractérisé en ce qu'**il comprend une base des noyaux optimisés (16) et **en ce que** le module de combinaison et d'assemblage (14) est relié à la base des noyaux optimisés (16) par des moyens de transfert (79) pour stocker dans cette base des noyaux optimisés les informations comprenant les versions optimisées, leur zone d'utilisation et le cas échéant le test à exécuter pour déterminer dynamiquement la version la plus adaptée.

7. Système selon l'une quelconque des revendications 1 à 6, **caractérisé en ce que** le dispositif (80) d'optimisation et génération de code comprend un optimiseur (12) et un dispositif (18) de génération de code optimisé, ce dernier comprenant un module (20) de détection de boucles optimisables qui est relié à des moyens (71) de réception des codes sources (17) d'utilisateurs, un module (22) de décomposition en noyaux , un module (23) d'analyse de cas, d'assemblage et d'injection de code qui est relié à travers des moyens de transfert (92) à l'optimiseur (12) pour transmettre l'identification du noyau détecté et des moyens de transfert (93) pour recevoir les informations décrivant le noyau optimisé correspondant, le module (23) d'analyse de cas, d'assemblage et d'injection de code étant en outre relié à des moyens (73) de fourniture des codes optimisés.

8. Système selon les revendications 6 et 7, **caractérisé en ce que** le module (23) d'analyse de cas, d'assemblage et d'injection de code est en outre relié à la base (16) des noyaux optimisés pour recevoir les informations décrivant un noyau optimisé sans invoquer l'optimiseur (12) si le noyau recherché y a été stocké.

9. Système selon la revendication 8, **caractérisé en ce que** le module (23) d'analyse de cas, d'assemblage et d'injection de code comprend en outre des moyens (74) pour rajouter aux séquences-étalons (1) des noyaux qui ont été mis en évidence dans ce module (23) d'analyse de cas, d'assemblage et d'injection de code sans avoir d'identification correspondante dans la base (16) des noyaux optimisés, ni dans les séquences- étalons.

10. Système selon l'une quelconque des revendications 6, 8 et 9, **caractérisé en ce qu'**il comprend un compilateur (81) et un éditeur de liens (82) pour recevoir un code source remanié (19) issu du dispositif (80) d'optimisation et génération du code et produire un code binaire optimisé (83) adapté à la plate-forme matérielle (90).

11. Système selon la revendication 10, **caractérisé en ce qu'**il comprend des moyens (85) pour transférer du code source des noyaux optimisés de la base des noyaux optimisés (16) vers le compilateur (81).

12. Système selon la revendication 10, **caractérisé en ce qu'**il comprend un compilateur (181) et un module d'installation (182) pour installer sur la plate-forme matérielle (90) une bibliothèque dynamique contenant l'ensemble des fonctionnalités des noyaux optimisés.

13. Système selon l'une quelconque des revendications 1 à 12, **caractérisé en ce que** le domaine d'application prédéterminé est le calcul scientifique.

14. Système selon l'une quelconque des revendications 1 à 12, **caractérisé en ce que** le domaine d'application prédéterminé est le traitement du signal.

15. Système selon l'une quelconque des revendications 1 à 12, **caractérisé en ce que** le domaine d'application prédéterminé est le traitement graphique

16. Système selon l'une quelconque des revendications 1 à 15, **caractérisé en ce que** les séquences-étalons (1) comprennent un ensemble de codes de type boucle simples et génériques spécifiés dans un langage de type source et organisés en niveaux de manière hiérarchique par ordre de complexité croissante du code du corps de boucle.

17. Système selon la revendication 16, **caractérisé en ce que** les séquences-étalons (1) comprennent des séquences-étalons de niveau 0 dans lesquelles une seule opération élémentaire est testée et correspond à un corps de boucle constitué d'une seule expression arithmétique représentée par un arbre de hauteur 0.

18. Système selon la revendication 17, **caractérisé en ce que** les séquences-étalons comprennent des séquences-étalons de niveau 1 pour lesquelles sont considérées et testées les combinaisons de deux opérations de niveau 0, les opérations des séquences-étalons de niveau 1 correspondant à des corps de boucles constitués soit d'une seule expression arithmétique représentée par un arbre de hauteur 1, soit de deux expressions arithmétiques, chacune étant représentée par un arbre de hauteur 0.

19. Système selon la revendication 18, **caractérisé en ce que** les séquences-étalons (1) comprennent des séquences-étalons de niveau 2 pour lesquelles sont considérées et testées les combinaisons de deux opérations de niveau 1 ou de trois opérations de niveau 0.

20. Système selon l'une quelconque des revendications 16 à 19, **caractérisé en ce que** les paramètres statiques (2) comprennent notamment le nombre d'itérations de la boucle pour chaque séquence-étalon, le pas d'accès aux tableaux et le type d'opérande, le type d'instructions utilisées, les stratégies de préchargement, les stratégies d'ordonnancement des instructions et des itérations.

21. Système selon l'une quelconque des revendications 16 à 20, **caractérisé en ce que** les paramètres dynamiques (7) comprennent notamment la localisation des opérandes tableaux dans les différents niveaux de la hiérarchie mémoire, la position relative des adresses de départ des tableaux et l'historique des branchements.

22. Système selon l'une quelconque des revendications 6, 8 et 9, **caractérisé en ce que** la base des noyaux optimisés (16) comprend des séquences de code source de type boucle correspondant à des fragments de code réel et utile et organisés en niveaux par ordre de complexité croissante.

23. Système selon l'une quelconque des revendications 1 à 12, **caractérisé en ce que** la plate-forme matérielle prédéfinie (90) comporte au moins un processeur du type Itanium.

24. Système selon l'une quelconque des revendications 1 à 12, **caractérisé en ce que** la plate-forme matérielle prédéfinie (90) comporte au moins un processeur du type Power ou PowerPC.

25. Système selon l'une quelconque des revendications 13 à 15 et selon la revendication 23, **caractérisé en ce que** les règles d'optimisation (9) comprennent au moins certaines des règles suivantes :
(a) minimiser le nombre d'Ecritures en cas de mauvaise performance des Ecritures par rapport aux Lectures,
(b) importance de l'utilisation des paires de chargement en virgule flottante,
(c) ajuster le degré de déroulage en fonction de la complexité du corps de boucle,
(d) utiliser les latences opérationnelles des opérations arithmétiques,
(e) appliquer des techniques de masquage pour les vecteurs courts,
(f) utiliser des suffixes de localité pour les accès mémoire (Lecture, Ecriture, Préchargement),
(g) définir les distances de Préchargement,
(h) effectuer une vectorisation de degré 4 pour éviter une partie des conflits de bancs L2
(i) prendre en compte de multiples variantes pour éviter une autre partie des conflits de bancs L2 et les conflits dans la file d'attente des Lectures/Ecritures
(j) prendre en compte les gains de performances liés aux différentes optimisations.
(k) utiliser des chaînes de branchement minimisant les mauvaises prédictions (vecteurs courts)
(l) fusionner les accès mémoires (regroupement de pixels)
(m) vectoriser les traitements sur pixels.

26. Système selon l'une quelconque des revendications 13 à 15 et selon la revendication 24, **caractérisé en ce que** les règles d'optimisation (9) comprennent au moins certaines des règles suivantes :
(a) réordonnancer les Lectures pour regrouper les défauts de caches
(b) utiliser le préchargement uniquement sur les Ecritures
(c) ajuster le degré de déroulage en fonction de la complexité du corps de boucle,
(d) utiliser les latences opérationnelles des opérations arithmétiques,
(e) utiliser des suffixes de localité pour les accès mémoire (Lecture, Ecriture, Préchargement),
(f) définir les distances de Préchargement,
(g) prendre en compte de multiples variantes pour éviter les conflits dans les files d'attente Lecture/Ecriture
(h) prendre en compte les gains de performances liés aux différentes optimisations.

## Claims

1. A system for operating automatically on source code (17) submitted by users to generate optimized code (19) suitable for running on a predefined hardware platform (90) comprising at least one processor (91), and for use in a predetermined field of application, the system being **characterized in that** it comprises means (51, 52) for receiving symbolic code sequences referred to as benchmark sequences (1) representative of the behavior of said processor (91) in terms of performance, for the predetermined field of application; means (53) for receiving first static parameters (2) defined on the basis of the predefined hardware platform (90), its processor (91), and the benchmark sequences (1); means (55) for receiving dynamic parameters (7) also defined on the basis of the predefined hardware platform (90), its processor (91), and the benchmark sequences (1); an analyzer device (10) for establishing optimization rules (9) from tests and measurements of performance carried out using the benchmark sequences (1), the static parameters (2), and the dynamic parameters (7); a device (80) for optimizing and generating code receiving firstly the benchmark sequences (1) and secondly the optimization rules (9) for examining the user source code (17), detecting optimizable loops, decomposing them into kernels, and assembling and injecting code to deliver the optimized code (19); and means (74) for reinjecting information coming from the device (80) for generating and optimizing code and relating to the kernels back into the benchmark sequences (1).

2. A system according to claim 1, **characterized in that** the analyzer device (10) comprises a test generator (3) connected firstly to the means (51) for receiving benchmark sequences and secondly to the means (53) for receiving static parameters in order to generate automatically a large number of test variants which are transferred by transfer means (61) to be stored in a variant database (4); an exerciser (5) connected firstly to transfer means (62) for receiving the test variants stored in the variant database (4) and secondly to the means (55) for receiving dynamic parameters to execute the test variants in a range of variation of the dynamic parameters (7) and produce results which are transferred by transfer means (63) for storage in a results database (6); and an analyzer (8) connected to the transfer means (64) to receive the results stored in the results database (6), to analyze them, and to deduce therefrom optimization rules which are transferred by transfer means (57) into an optimization rules database (9).

3. A system according to claim 2, **characterized in that** the analyzer (8) includes filter means having an arbitrary threshold for optimum performance, so as to consider a variant in the results database as being optimal in the parameter space providing it satisfies the filter criteria.

4. A system according to claim 2 or claim 3, **characterized in that** the analyzer (8) further comprises means (54) for modifying the static parameters (2) and means (56) for modifying the dynamic parameters (7).

5. A system according to any one of claims 1 to 4, **characterized in that** the device (80) for optimizing and generating code comprises a device (18) for generating optimized code and an optimizer (12), the optimizer comprising a strategy selection module (13) connected firstly to the means (92) for receiving kernels identified in the original source code, secondly to the means (52) for receiving benchmark sequences (1), and thirdly to means (58) for receiving optimization rules (9) so as to generate, for each kernel corresponding to a tested benchmark sequence, a plurality of versions (15), each being optimal under a certain combination of parameters, and a combination and assembly module (14) connected to the means (59) for receiving optimization rules (9), to means (66) for receiving information coming from the strategy selection module (13), and to means (68) for receiving the plurality of versions (15), in order to deliver via transfer means (93) information comprising the corresponding optimized versions, their utilization zone, and where appropriate the test to be executed in order to determine dynamically which version is the most suitable.

6. A system according to claim 5, **characterized in that** it comprises an optimized kernel database (16), and **in that** the combination and assembly module (14) is connected to the optimized kernel database (16) by transfer means (79) for storing information in said optimized kernel database, said information comprising the optimized versions, their utilization zones, and where appropriate the test to be executed in order to determine dynamically which version is the most suitable.

7. A system according to any one of claims 1 to 6, **characterized in that** the device (80) for optimizing and generating code comprises an optimizer (12) and a device (18) for generating optimized code, which device comprises a module (20) for detecting optimizable loops that is connected to means (71) for receiving user source code (17), a module (22) for decomposing them into kernels, a module (23) for case analysis, assembly, and code injection that is connected via transfer means (92) to the optimizer (12) to transmit the identity of the detected kernel, and transfer means (93) for receiving the information describing the corresponding optimized kernel, with the module (23) for case analysis, assembly, and code injection also being connected to means (73) for supplying optimized code.

8. A system according to claims 6 and 7, **characterized in that** the module (23) for case analysis, assembly, and code injection is also connected to the optimized kernel database (16) to receive information describing an optimized kernel without invoking the optimizer (12) if the looked-for kernel has been stored therein.

9. A system according to claim 8, **characterized in that** the module (23) for case analysis, assembly, and code injection further comprises means (74) for adding to the benchmark sequences (1), kernels that have been discovered in the module (23) for case analysis, assembly, and code injection, without having the corresponding identity in the optimized kernel database (16) nor in the benchmark sequences.

10. A system according to any one of claims 6, 8, and 9, **characterized in that** it includes a compiler (81) and a link editor (82) for receiving reorganized source code (19) from the device (80) for optimizing and generating code, and for producing optimized binary code (83) adapted to the hardware platform (90).

11. A system according to claim 10, **characterized in that** it includes means (85) for transferring the source code for the optimized kernels from the optimized kernel database (16) to the compiler (81).

12. A system according to claim 10, **characterized in that** it includes a compiler (181) and an installation module (182) for installing a dynamic library on the hardware platform (90), which library contains all of the capabilities of the optimized kernels.

13. A system according to any one of claims 1 to 12, **characterized in that** the predetermined field of application is scientific computation.

14. A system according to any one of claims 1 to 12, **characterized in that** the predetermined field of application is signal processing.

15. A system according to any one of claims 1 to 12, **characterized in that** the predetermined field of application is graphics processing.

16. A system according to any one of claims 1 to 15, **characterized in that** the benchmark sequences (1) comprise a set of simple and generic loop type code fragments specified in a source type language and organized in a hierarchy of levels by order of increasing complexity of the code for the loop body.

17. A system according to claim 16, **characterized in that** the benchmark sequences (1) comprise benchmark sequences of level 0 in which only one individual operation is tested and corresponds to a loop body constituted by a single arithmetic expression represented by a tree of height 0.

18. A system according to claim 17, **characterized in that** the benchmark sequences comprise benchmark sequences of level 1 for which there are considered and tested combinations of two level 0 operations; level 1 benchmark sequence operations corresponding to loop bodies constituted either by a single arithmetic expression represented by a tree of height 1, or by two arithmetic expressions, each being represented by a tree of height 0.

19. A system according to claim 18, **characterized in that** the benchmark sequences (1) comprise benchmark sequences of level 2, for which there are considered and tested combinations of two level 1 operations or three level 0 operations.

20. A system according to any one of claims 16 to 19, **characterized in that** the static parameters (2) comprise in particular the number of loop iterations for each benchmark sequence, the table access step size and the type of operands, the type of instructions used, the preloading strategies, and the strategies for ordering instructions and iterations.

21. A system according to any one of claims 16 to 20, **characterized in that** the dynamic parameters (7) comprise in particular the location of table operands in the various levels of the memory hierarchy, the relative positions of the table starting addresses, and the branching history.

22. A system according to any one of claims 6, 8, and 9, **characterized in that** the optimized kernel database (16) includes loop type source code sequences corresponding to code fragments that are real and useful and organized in levels in order of increasing complexity.

23. A system according to any one of claims 1 to 12, **characterized in that** the predefined hardware platform (90) comprises at least one Itanium type processor.

24. A system according to any one of claims 1 to 12, **characterized in that** the predefined hardware platform (90) comprises at least one Power or Power PC type processor.

25. A system according to any one of claims 13 to 15 and according to claim 23, **characterized in that** the optimization rules (9) comprise at least some of the following rules:
a) minimizing the number of writes, in the event of write performance that is poor compared with read performance;
b) the importance of using loading pairs in floating point;
c) adjusting the degree to which a loop is unrolled as a function of the complexity of the loop body;
d) using operational latencies of arithmetic operations;
e) applying masking techniques for short vectors;
f) using locality suffixes for memory accesses (reading, writing, preloading);
g) defining preloading distances;
h) performing degree 4 vectorization so as to avoid some of the L2 bank conflicts;
i) taking account of multiple variants in order to avoid other L2 bank conflicts and conflicts in the read/write queue;
j) taking account of performance improvements associated with different optimizations;
k) using branching chains that minimize wrong predictions (short vectors);
l) merging memory accesses (grouping pixels together);
m) vectorizing processing on pixels.

26. A system according to any one of claims 13 to 15 and according to claim 24, **characterized in that** the optimization rules (9) comprise at least some of the following rules:
a) re-ordering reads in order to group cache defects together;
b) using preloading solely for writes;
c) adjusting the degree to which loops are unrolled as a function of the complexity of the loop body;
d) using operational latencies in arithmetic operations;
e) using locality suffixes for memory accesses (reading, writing, preloading);
f) defining preloading distances;
g) taking account of multiple variants to avoid conflicts in read/write queues;
h) taking account of performance improvements associated with different optimizations.

## Patentansprüche

1. System zur automatischen Generierung optimierter Operationscodes (19) auf einer vordefinierten Hardwareplattform (90) mit wenigstens einem Prozessor (91), für ein vorbestimmtes Anwendungsgebiet, anhand von durch Benutzer vorgelegten Quellcodes (17), **dadurch gekennzeichnet, daß** es folgendes umfaßt, nämlich Mittel (51, 52) zum Empfangen von das Performanceverhalten des Prozessors (91) repräsentierenden symbolischen Codesequenzen, sogenannten Mustersequenzen (1), für das vorbestimmte Anwendungsgebiet, Mittel (53) zum Empfangen von statischen Parametern (2), die mittels der vordefinierten Hardwareplattform (90), ihres Prozessors (91) und der Mustersequenzen (1) definiert sind, Mittel (55) zum Empfangen von dynamischen Parametern (7), die ebenfalls mittels der vordefinierten Hardwareplattform (90), ihres Prozessors (91) und der Mustersequenzen (1) definiert sind, eine Analysevorrichtung (10), um anhand von Performancetests und -messungen, die auf Grundlage der Mustersequenzen (1), der statischen Parameter (2) und der dynamischen Parameter (7) festgelegt werden, Optimierungsregeln (9) aufzustellen, eine Vorrichtung (80) zur Codeoptimierung und -generierung, die einerseits die Mustersequenzen (1) und andererseits die Optimierungsregeln (9) empfängt, um die Benutzer-Quellcodes (17) zu überprüfen, optimierbare Schleifen zu erfassen, in Kerne zu zerlegen, zusammenzufügen und Codes einzuspeisen, um optimierte Codes (19) zu liefern, sowie Mittel (74), um aus der Vorrichtung zur Codegenerierung und -optimierung (80) stammende Informationen über Kerne wieder in die Mustersequenzen (1) einzuspeisen.

2. System nach Anspruch 1, **dadurch gekennzeichnet, daß** die Analysevorrichtung (10) folgendes umfaßt, nämlich einen Testgenerator (3), der einerseits mit den Mitteln (51) zum Empfangen von Mustersequenzen und andererseits mit den Mitteln (53) zum Empfangen statischer Parameter verbunden ist, um automatisch eine große Anzahl von Testvarianten zu generieren, die durch Übertragungsmittel (61) übertragen werden, um in einer Variantendatenbank (4) gespeichert zu werden, einen Excerciser (5), der einerseits mit Übertragungsmitteln (62) verbunden ist, um die in der Variantendatenbank (4) gespeicherten Testvarianten zu empfangen, und andererseits mit den Mitteln (55) zum Empfangen dynamischer Parameter, um die Testvarianten in einem Variationsbereich der dynamischen Parameter (7) auszuführen und um Ergebnisse zu erzeugen, die durch Übertragungsmittel (63) übertragen werden, um in einer Ergebnisdatenbank (64) gespeichert zu werden, sowie einen Analyzer (8), der mit Übertragungsmitteln (64) verbunden ist, um die in der Ergebnisdatenbank (6) gespeicherten Daten zu empfangen, diese zu analysieren und daraus Optimierungsregeln abzuleiten, die durch Übertragungsmittel (57) in eine Datenbank für Optimierungsregeln (9) übertragen werden.

3. System nach Anspruch 2, **dadurch gekennzeichnet, daß** der Analyzer (8) Mittel zum Filtern der optimalen Performance mit einer willkürlichen Schwelle umfaßt, so daß eine Variante der Ergebnisdatenbank in dem Bereich der Parameter als optimal betrachtet wird, wenn sie die Filterkriterien erfüllt.

4. System nach Anspruch 2 oder Anspruch 3, **dadurch gekennzeichnet, daß** der Analyzer (8) ferner Mittel (54) zum Modifizieren der statischen Parameter (2) sowie Mittel (56) zum Modifizieren der dynamischen Parameter (7) umfaßt.

5. System nach einem der Ansprüche 1 bis 4, **dadurch gekennzeichnet, daß** die Vorrichtung (80) zur Codeoptimierung und -generierung eine Vorrichtung (18) zur Generierung optimierter Codes sowie einen Optimizer (12) aufweist, wobei letzterer folgendes umfaßt, nämlich ein Strategieauswahlmodul (13), das einerseits mit den Mitteln (92) zum Empfangen der in den ursprünglichen Quellcodes identifizierten Kerne, außerdem mit den Mitteln (52) zum Empfangen von Mustersequenzen (1) und andererseits mit Mitteln (58) zum Empfangen von Optimierungsregeln (9) verbunden ist, um für jeden Kern, der einer getesteten Mustersequenz entspricht, eine Vielzahl von Versionen (15) zu generieren, von denen eine jede für eine gewisse Kombination von Parametern optimal ist, sowie ein Kombinations- und Zusammenführungsmodul (14), das mit den Mitteln (59) zum Empfangen von Optimierungsregeln (9), mit Mitteln (66) zum Empfangen von Informationen aus dem Strategieauswahlmodul (13) sowie mit Mitteln (68) zum Empfangen der Vielzahl von Versionen (15) verbunden ist, um über die Übertragungsmittel (93) Informationen zu liefern, welche die entsprechenden optimierten Versionen, deren Verwendungsbereich sowie gegebenenfalls den für die dynamische Bestimmung der geeignetsten Version auszuführenden Test umfassen.

6. System nach Anspruch 5, **dadurch gekennzeichnet, daß** es eine Datenbank der optimierten Kerne (16) umfaßt, und daß das Kombinations- und Zusammenführungsmodul (14) mit der Datenbank der optimierten Kerne (16) durch Übertragungsmittel (79) verbunden ist, um in dieser Datenbank der optimierten Kerne die Informationen zu speichern, welche die optimierten Versionen, deren Verwendungsbereich sowie gegebenenfalls den für die dynamische Bestimmung der geeignetsten Version auszuführenden Test umfassen.

7. System nach einem der Ansprüche 1 bis 6, **dadurch gekennzeichnet, daß** die Vorrichtung (80) zur Codeoptimierung- und -generierung einen Optimizer (12) und eine Vorrichtung (18) zur Generierung optimierter Codes umfaßt, wobei letztere folgendes umfaßt, nämlich ein Modul (20) zur Erfassung optimierbarer Schleifen, das mit Mitteln (71) zum Empfangen der Benutzer-Quellcodes (17) verbunden ist, ein Modul (22) zur Zerlegung in Kerne, ein Modul (23) zur Fallanalyse, zum Zusammenführen und zur Codeeinspeisung, das durch die Übertragungsmittel (92) mit dem Optimizer (12) verbunden ist, um die Identifikation des erfaßten Kerns zu übertragen, sowie Übertragungsmittel (93), um die Informationen zu empfangen, die den entsprechenden optimierten Kern beschreiben, wobei das Modul (23) zur Fallanalyse, zum Zusammenführen und zur Codeeinspeisung ferner mit Mitteln (73) zum Bereitstellen der optimierten Codes verbunden ist.

8. System nach den Ansprüchen 6 und 7, **dadurch gekennzeichnet, daß** das Modul (23) zur Fallanalyse, zum Zusammenführen und zur Codeeinspeisung ferner mit der Datenbank (16) der optimierten Kerne verbunden ist, um die einen optimierten Kern beschreibenden Informationen zu empfangen, ohne den Optimizer (12) heranzuziehen, wenn der gewünschte Kern in der Datenbank gespeichert worden ist.

9. System nach Anspruch 8, **dadurch gekennzeichnet, daß** das Modul (23) zur Fallanalyse, zum Zusammenführen und zur Codeeinspeisung ferner Mittel (74) umfaßt, um den Mustersequenzen (1) Kerne zuzufügen, die in diesem Modul (23) zur Fallanalyse, zum Zusammenführen und zur Codeeinspeisung nachgewiesen worden sind, ohne in der Datenbank (16) der optimierten Kerne, noch in den Mustersequenzen eine entsprechende Identifikation zu haben.

10. System nach einem der Ansprüche 6, 8 und 9, **dadurch gekennzeichnet, daß** es einen Compiler (81) sowie einen Linkage-Editor (82) umfaßt, um einen überarbeiteten Quellcode (19) aus der Codeoptimierungs- und -generierungsvorrichtung (80) zu empfangen, und um einen der Hardwareplattform (90) angepaßten optimierten Binärcode (83) zu erzeugen.

11. System nach Anspruch 10, **dadurch gekennzeichnet, daß** es Mittel (85) aufweist, um Quellcode der optimierten Kerne von der Datenbank der optimierten Kerne (16) zu dem Compiler (81) zu übertragen.

12. System nach Anspruch 10, **dadurch gekennzeichnet, daß** es einen Compiler (181) und ein Installationsmodul (182) umfaßt, um auf der Hardwareplattform (90) eine dynamische Bibliothek zu installieren, die alle Funktionalitäten der optimierten Kerne enthält.

13. System nach einem der Ansprüche 1 bis 12, **dadurch gekennzeichnet, daß** das vorbestimmte Anwendungsgebiet die wissenschaftliche Berechnung ist.

14. System nach einem der Ansprüche 1 bis 12, **dadurch gekennzeichnet, daß** das vorbestimmte Anwendungsgebiet die Signalverarbeitung ist.

15. System nach einem der Ansprüche 1 bis 12, **dadurch gekennzeichnet, daß** das vorbestimmte Anwendungsgebiet die graphische Bearbeitung ist.

16. System nach einem der Ansprüche 1 bis 15, **dadurch gekennzeichnet, daß** die Mustersequenzen (1) eine Einheit von einfachen und generischen Schleifencodes enthalten, die in einer Quellsprache spezifiziert sind und in der Reihenfolge zunehmender Komplexität des Codes des Schleifenrumpfes hierarchisch in Ebenen geordnet sind.

17. System nach Anspruch 16, **dadurch gekennzeichnet, daß** die Mustersequenzen (1) Mustersequenzen der Ebene 0 umfassen, bei denen eine einzige Elementaroperation getestet wird und einem Schleifenrumpf entspricht, der von einem einzigen, durch einen Baum der Höhe 0 repräsentierten arithmetischen Ausdruck gebildet ist.

18. System nach Anspruch 17, **dadurch gekennzeichnet, daß** die Mustersequenzen Mustersequenzen der Ebene 1 umfassen, für die die Kombinationen von zwei Operationen der Ebene 0 betrachtet und getestet werden, wobei die Operationen der Mustersequenzen der Ebene 1 Schleifenrümpfen entsprechen, die entweder von einem einzigen, durch einen Baum der Höhe 1 repräsentierten arithmetischen Ausdruck oder von zwei arithmetischen Ausdrücken, wobei ein jeder durch einen Baum der Höhe 0 repräsentiert ist, gebildet sind.

19. System nach Anspruch 18, **dadurch gekennzeichnet, daß** die Mustersequenzen (1) Mustersequenzen der Ebene 2 umfassen, für die die Kombinationen von zwei Operationen der Ebene 1 oder von drei Operationen der Ebene 0 betrachtet und getestet werden.

20. System nach einem der Ansprüche 16 bis 19, **dadurch gekennzeichnet, daß** die statischen Parameter (2) vor allem die Anzahl der Iterationen der Schleife für jede Mustersequenz, den Verzeichniszugriffsschritt sowie den Operandentyp, die Art der verwendeten Befehle, die Vorladestrategien, die Strategien der Ablaufsteuerung der Befehle und der Iterationen umfassen.

21. System nach einem der Ansprüche 16 bis 20, **dadurch gekennzeichnet, daß** die dynamischen Parameter (7) vor allem die Lokalisierung der Verzeichnisoperanden in den verschiedenen Ebenen der Speicherhierarchie, die Relativposition der Startadressen der Verzeichnisse sowie das Protokoll der Verzweigungen umfassen.

22. System nach einem der Ansprüche 6, 8 und 9, **dadurch gekennzeichnet, daß** die Datenbank der optimierten Kerne (16) Schleifen-Quellcodesequenzen umfassen, die Fragmenten eines reellen und nützlichen Codes entsprechen und in der Reihenfolge zunehmender Komplexität in Ebenen geordnet sind.

23. System nach einem der Ansprüche 1 bis 12, **dadurch gekennzeichnet, daß** die vordefinierte Hardwareplattform (90) wenigstens einen Prozessor vom Typ Itanium-Prozessor aufweist.

24. System nach einem der Ansprüche 1 bis 12, **dadurch gekennzeichnet, daß** die vordefinierte Hardwareplattform (90) wenigstens einen Prozessor vom Typ Power-oder PowerPC-Prozessor umfaßt.

25. System nach einem der Ansprüche 13 bis 15 und nach Anspruch 23, **dadurch gekennzeichnet, daß** die Optimierungsregeln (9) wenigstens einige der folgenden Regeln umfassen:
(a) Minimieren der Anzahl der Schreibvorgänge im Falle schlechter Performance der Schreibvorgänge im Vergleich zu den Lesevorgängen,
(b) Bedeutung der Verwendung der Floating Point Load-Paare,
(c) Einstellen des Abrollgrades in Abhängigkeit der Komplexität des Schleifenrumpfes,
(d) Verwenden der Operationslatenzzeiten der arithmetischen Operationen,
(e) Anwenden von Maskierungstechniken für die Kurzvektoren,
(f) Verwenden von Orts-Suffixen für die Speicherzugriffe (Lesen, Schreiben, Vorladen),
(g) Definieren der Vorladeabstände,
(h) Durchführen einer Vektorisierung der Stufe 4, um einen Teil der Bankkonflikte L2 zu vermeiden,
(i) Berücksichtigen vielfältiger Varianten, um einen weiteren Teil der Bankkonflikte L2 sowie die Konflikte in der Warteschlange der Lese-/Schreibvorgänge zu vermeiden,
(j) Berücksichtigen der mit den verschiedenen Optimierungen verbundenen Performance-Gewinne,
(k) Verwenden von Verzweigungsketten, welche die falschen Vorhersagen (Kurzvektoren) reduzieren,
(l) Bündeln der Speicherzugriffe (Pixelgruppierung)
(m) Vektorisieren der Pixel-Verarbeitungen.

26. System nach einem der Ansprüche 13 bis 15 und nach Anspruch 24, **dadurch gekennzeichnet, daß** die Optimierungsregeln (9) wenigstens einige der folgenden Regeln umfassen:
(a) erneute Ablaufsteuerung der Lesevorgänge, um die Cache-Fehler zu gruppieren,
(b) Verwenden des Vorladens lediglich bei den Schreibvorgängen,
(c) Einstellen des Abrollgrades in Abhängigkeit der Komplexität des Schleifenrumpfes,
(d) Verwenden der Operationslatenzzeiten der arithmetischen Operationen,
(e) Verwenden von Orts-Suffixen für die Speicherzugriffe (Lesen, Schreiben, Vorladen),
(f) Definieren der Vorladeabstände,
(g) Berücksichtigen vielfältiger Varianten, um die Konflikte in den Lese-/Schreib-Warteschlangen zu vermeiden,
(h) Berücksichtigen der mit den verschiedenen Optimierungen verbundenen Performance-Gewinne.
